# EUROPÄISCHE PATENTANMELDUNG

(11) **EP 2 020 558 A1**
(43) Veröffentlichungstag der Anmeldung: **04.02.2009**
(21) Anmeldenummer: 07014380.5
(22) Anmeldetag: 21.07.2007
(51) Int. Cl.: F16M 11/42, B66F 11/04

(54) **Vorrichtung zum Fotografieren und/oder Scannen und/oder Vermessen eines Objekts**

(71) Anmelder: Otto-Friedrich-Universität Bamberg, 96045 Bamberg (DE); Friedrich-Alexander-Universität Erlangen-Nürnberg, 91054 Erlangen (DE)
(72) Erfinder: Seitz, Alexander, 91166 Georgensgmünd (DE); Stöber, Christina, 91058 Erlangen (DE); Wittko, Lars, 96047 Bamberg (DE); Munker, Florian, 91052 Erlangen (DE); Beckett, Barbara, 89278 Nersingen (DE); Drewello, Rainer, 96047 Bamberg (DE); Beckett, Nicholas James, 89278 Nersingen (DE)
(74) Vertreter: Gosdin, Michael

(57) **Zusammenfassung**

Die Erfindung betrifft eine Vorrichtung (1) zum Fotografieren und/oder Scannen und/oder Vermessen eines Objekts, insbesondere eines sich in größerer Höhe über dem Boden befindlichen Teils eines Baudenkmals. Um in einfacher Weise schwer zugängliche Stellen in großer Höhe insbesondere von Baudenkmälern fotografieren oder vermessen zu können, sieht die Erfindung vor: ein Trägerfahrzeug (2) mit mindestens einem Antriebsmotor, einen aus mehreren ineinanderfahrbar ausgebildeten Teilen (3', 3", 3"', 3"") bestehender Teleskopausleger (3), wobei das eine Endteil (3') des Teleskopauslegers (3) im oberen Bereich des Trägerfahrzeugs (2) um eine horizontale Achse (H) schwenkbar angeordnet ist, und eine am anderen Endteil (3") des Teleskopauslegers (3) angeordnete, insbesondere modular ausgebildete Trägerplattform (4) zur Aufnahme mindestens eines Aufnahme- oder Messgeräts (5).

## Beschreibung

Die Erfindung betrifft eine Vorrichtung zum Fotografieren und/oder Scannen und/oder Vermessen eines Objekts, insbesondere eines sich in größerer Höhe über dem Boden befindlichen Teils eines Baudenkmals.

Historische Gebilde, wie die Innenräume von Kirchen, bedürfen einer stetigen Pflege. Hier finden sich kunstvolle Wandmalereien an den Wänden und Decken, prächtige Altare, Glasmalereien, etc. Ohne kontinuierliche Maßnahmen zum Erhalt dieser Objekte wäre ihr Erhalt für die Nachwelt gefährdet.

Daher ist es wünschenswert, eine qualitativ hochwertige Technologie zur Verfügung zu haben, die zu einer Standardmethode für die zwei- oder dreidimensionale Dokumentation komplexer Oberflächen werden kann. Mit Hilfe dieser Dokumentation soll zunächst der Ist-Zustand jener Oberflächen dokumentiert werden. Daraus kann die Restaurierungsbedürftigkeit abgeleitet werden. Weiterhin können die Schadensverläufe anhand des festgehaltenen Ausgangszustandes in Zukunft anschaulich dargestellt werden und rechtzeitig Maßnahmen für eine Restaurierung getroffen werden.

Hierzu kommt zumeist die Fotografie zum Einsatz. Speziell hoch liegende und schwer einsehbare Oberflächen sollen mit Hilfe eines einfach einzusetzenden Systems standardisiert dokumentiert werden. Es ist in diesem Zusammenhang auch an den Einsatz eines 3D-Laserscanner gedacht.

Bisher wurde zu der genannten Dokumentation ein Gerüstsystem verwendet. Dieses System erfordert einen Aufbau mit hohem Anteil an manuellen Tätigkeiten. Dabei wird das Gerüst teilweise in der Wand verankert, damit es nicht umkippt. Von dort aus kann ein Fotograf den Zustand der Wand dokumentieren.

Das System bietet den Vorteil, dass es auf eine altbekannte Gerüsttechnik zurückgreift und zuverlässig arbeitet. Allerdings ergeben sich auch diverse Nachteile. Der Aufbau ist sehr zeitintensiv. Von Laien kann der Gerüstaufbau nicht vorgenommen werden. Das Gerüst stellt ein unästhetisches Gebilde im Innenraum eines Baudenkmals, insbesondere einer Kirche dar. Damit ergibt sich eine entsprechende Behinderung für Besucher und Touristen. Auch der Abbau ist langwierig. Schließlich sind Beschädigungen der Wände wegen der eventuell nötigen Befestigungen unvermeidlich.

Der Erfindung liegt daher die Aufgabe zugrunde, eine gattungsgemäße Vorrichtung so fortzubilden, dass die genannten Nachteile vermeiden werden. Es wird also eine einfache und leichte Konstruktion angestrebt, die eine große Arbeitshöhe im Bereich zwischen 20 und 30 Metern für Aufnahmen und Scans ermöglicht, wobei ein schwingungsarmes System angestrebt wird. Dabei soll die Vorrichtung insbesondere dem Umstand Rechnung tragen, dass sie bevorzugt in historischen Gebäuden eingesetzt werden soll, die sich durch ungünstige Zugänglichkeit und Einschränkungen hinsichtlich der Belastungsgrenzen historischer Böden auszeichnen. Damit wird angestrebt, dass zwecks Dokumentation und Untersuchung von Baudenkmälern eine einfache und preisgünstige Möglichkeit geschaffen wird, ohne nennenswerte Behinderungen bzw. Belästigungen die erwünschten Aufnahmen erstellen zu können.

Die Lösung dieser Aufgabe durch die Erfindung ist dadurch gekennzeichnet, dass die Vorrichtung aufweist:
- ein Trägerfahrzeug mit mindestens einem Antriebsmotor,
- einen aus mehreren ineinanderfahrbar ausgebildeten Teilen bestehender Teleskopausleger, wobei das Endteil des Teleskopauslegers im oberen Bereich des Trägerfahrzeugs um eine horizontale Achse schwenkbar angeordnet ist, und
- eine am anderen Endteil des Teleskopauslegers angeordnete, insbesondere modular ausgebildete Trägerplattform zur Aufnahme mindestens eines Aufnahme- oder Messgeräts.

Bevorzugt ist dabei vorgesehen, dass das Trägerfahrzeug einen Raupenantrieb aufweist. Ferner sind bevorzugt am Trägerfahrzeug eine Anzahl, vorzugsweise vier, ausfahrbarer oder ausklappbarer Beine angeordnet. Dies ermöglicht einen festen Stand der Vorrichtung auch bei ungünstig zugänglichen Bereichen.

Das Trägerfahrzeug hat mit besonderem Vorteil sowohl einen Antriebsmotor in Form einer Brennkraftmaschine als auch einen elektrischen Antriebsmotor. Dadurch ist die Vorrichtung im Freien autark bewegbar und im Inneren eines Gebäudes, wo Abgase Schäden anrichten können, abgasfrei durch einen Elektromotor verfahrbar.

Der Teleskopausleger ist auf dem Trägerfahrzeug vorzugsweise auf einer Linearführung angeordnet, mit der er in Längsrichtung des Trägerfahrzeugs relativ zu diesem verfahren werden kann.

Der Teleskopausleger habe dabei besonders bevorzugt zwischen 6 und 10, vorzugsweise 8, ineinanderfahrbar ausgebildete Teile. Diese Anzahl gewährt bei Sicherstellen einer ausreichenden Ausfahrhöhe eine günstige Schwingungsdämpfung.

Der Teleskopausleger weist dabei im vollständig ausgefahrenen Zustand vorzugsweise eine Länge von mindestens 15 m, vorzugsweise von 25 m, auf. Angestrebt wird eine maximale Höhe von 20 bis 30 Metern, da dies erst ausreichend ist, auch in großen Baudenkmälern, insbesondere in Kathedralen, Untersuchungen an hochliegenden Gebäudeteilen vornehmen zu können.

Das Aufnahme- oder Messgerät ist insbesondere ein (digitaler) Fotoapparat, ein 3D-Scanner oder ein thermographisches Aufzeichnungsgerät.

Weiterhin ist an der Trägerplattform vorzugsweise mindestens eine Haltevorrichtung (vorzugsweise zwei Haltevorrichtungen) für ein Hilfselement, insbesondere für ein Beleuchtungssystem (mit Lampen, Blitzlichtern etc.) angeordnet.

Zwischen dem Trägerfahrzeug und der Trägerplattform kann mindestens ein Energieversorgungskabel verlaufen.

Das vorgeschlagene System ist für eine relativ geringe Traglast ausgelegt. Es ist keine Person anzuheben, sondern nur die Kamera mit den zugehörigen Peripherieelementen, wie Blitzer und Kabel für die Fernauslösung sowie Sucherbildübertragung zum Bedienpersonal. Das Gewicht des Kamerasystems mit den Blitzlichtern oder einem Laserscanner wurde entsprechend berücksichtigt und beträgt nicht mehr als 30 kg. Dies macht deutlich, dass vorbekannte Hebevorrichtungen für Arbeitsbühnen für diese Last deutlich überdimensioniert wären; diese Vorrichtungen sind gebaut, um Menschen mit deren Werkzeugen oder Lasten zu heben. Zusätzlich müssen bei solchen Vorrichtungen Sicherheiten mit berücksichtigt werden.

Dem gegenüber ist die vorgeschlagene Vorrichtung auf einen leichten Aufbau hin ausgerichtet, so dass relativ große Höhen in einfacher Weise stabil erreicht werden können. Mit dem vorgeschlagenen System sind daher insbesondere Fotoaufnahmen in großer Höhe möglich. Dabei wird - wie gesagt - eine Arbeitshöhe von 20 bis 30 Metern angestrebt.

Vorteilhaft ist es ferner, dass nicht nur eine große Höhe erreicht werden kann, sondern wegen der schwenkbaren Anordnung des Teleskopauslegers am Trägerfahrzeug auch zusätzlich eine horizontale Reichweite von ca. 2 bis 4 Metern.

Wesentlich ist es ferner, dass das Trägerfahrzeug problemlos so dimensioniert werden kann, dass eine maximale Breite von 600 mm bis 800 mm im zusammengebauten, fahrbereiten Zustand erreicht wird, so dass auch enge Türen (beispielsweise einer Kirche) mit der Vorrichtung passiert werden können. Häufig sind solche Türen bei den kleineren Seiteneingängen oder Hintereingängen historische Gebäude zu finden, die bevorzugt zum Befahren mit der Vorrichtung zu benutzen sind, um Belästigungen von Touristen und Besuchern minimal zu halten.

Weiterhin ist ein minimales Gewicht der Vorrichtung angestrebt, um historische Böden nicht zu beschädigen. Das Gewicht der Vorrichtung bleibt unter 2 t.

Vorteilhaft ist auch, dass eine ständige Kontrolle des Lastzustandes vorgenommen werden kann mit einer Abschaltung, falls das Gerät vom Personal versehentlich in den Überlastbereich gefahren wird. Die dafür notwendige Steuerung erfasst hierzu ständig den Ist-Lastzustand. Möglich ist dies mit Drucksensoren in den Abstützungen, Dehnmessstreifen am Teleskopausleger oder mit Überwachung der Stellung des Auslegers, insbesondere die ausgefahrene Länge, der Anstellwinkel und Drehwinkel. Kommt das Gerät in den kritischen Bereich, ist eine deutliche akustische und optische Warnung vorgesehen. Falls diese Signale keine Beachtung finden, verweigert die Vorrichtung selbständig, weiter in den Überlastbereich zu fahren.

Vom Boden aus ist es mitunter schwer, die genaue Position der Trägerplattform festzustellen. Um Kollisionen mit wertvoller Inneneinrichtung, insbesondere in großen Höhen um 30 Meter, zu vermeiden, ist eine Sensorik vorgesehen, um den genauen Abstand zu Hindernissen zu erfassen und gegebenenfalls einen entsprechenden Eingriff in die Steuerung der Maschine zu nehmen. Als Sensoren kommen Ultraschallsensoren, Infrarotsensoren und berührungsempfindliche Schalter in Frage.

Die auf der Trägerplattform angeordnete Kamera kann so befestigt werden, dass sie sich vom Bedienpersonal in alle Raumrichtungen schwenken lässt. Die vorgeschlagene Lösung zeichnet sich aufgrund der gewählten Anordnung und Abmessungen durch einen hohen Grad an Schwingungsarmmut aus. Ein zusätzliches Dämpfen von Schwingungen kann über einen zusätzlichen Schwingungsausgleich realisiert werden, wobei eine Regelung der Vertikal-und Horizontalbewegungen der Trägerplattform erfolgen kann, ähnlich eines Bildstabilisators einer Kamera. Eine andere Möglichkeit sind Stabilisierungsgyroskope, wie sie von Kameraleuten in Helikoptern eingesetzt werden. Kreisel mit hoher Masse stabilisieren hierbei aufgrund ihrer Trägheit die flexibel gelagerte Kamera. Nachteilig ist hierbei ein gewisses zusätzliches Gewicht.

Zielsetzung ist ein maximales zu tragendes Gewicht der Kamera bzw. des Scanners samt Peripherie von 30 kg. Die maximale Arbeitshöhe soll zwischen 20 und 30 Metern liegen. Der Abstand von der Wand soll beim Fotografieren bzw. beim Scannen ca. 2 bis 3 Meter betragen. Im ausgefahrenen Zustand soll eine horizontale Bewegung zwischen 2 und 4 Metern möglich sein. Der Teleskopausleger soll dabei möglichst stabil gehalten werden, d. h. Wackeln soll soweit wie möglich verhindert werden. Ferner sollen keine Nachschwingungen auftreten, wenn das System in eine definierte Position bewegt worden ist. Wichtig ist ferner, dass die Breite des gesamten Systems im zusammengefahrenen Zustand maximal 600 bis 800 mm beträgt, damit auch normale Türen passiert werden können. Die Gesamthöhe der Vorrichtung im zusammengefahrenen Zustand soll nicht höher als 1.800 mm betragen, um auch relativ niedrige Türen passieren zu können. Mit diesen Abmessungen ist auch ein Transport der Vorrichtung in einem Van möglich, d. h. es ist kein größeres Transportfahrzeug nötig. Das Maximalgewicht soll 2 t nicht überschreiten.

Im Betriebszustand ist es wünschenswert, wenn die Stabilisierungsbeine des Trägerfahrzeugs möglichst flexibel bewegt werden können. Dies ist z. B. dann von besonderer Bedeutung, wenn die Vorrichtung zwischen Kirchenbänken positioniert werden muss. Die Lastverteilung auf den Boden soll dabei möglichst gleichmäßig sein, um historische Böden so wenig wie möglich zu belasten bzw. zu beschädigen.

Der Auf- und Abbau soll möglichst einfach bewerkstelligt werden können.

Der Betrieb soll mittels Elektromotoren möglich sein, wobei eine Anschlussleitung für 230 V vorgesehen ist. Auch ein Eigenantrieb außerhalb des Gebäudes - vorzugsweise mittels Verbrennungsmotor - ist angestrebt. Ein Batterieantrieb für den Ausfall anderweitiger Versorgung kann von Vorteil sein. Dabei ist es auch von Vorteil, wenn das Trägerfahrzeug so ausgebildet ist, dass gegebenenfalls Stufen überwunden werden können. Dabei kann eine berührungslose Hinderniserkennung vorgesehen sein, um Kollisionen beim Transport zu vermeiden.

Die Trägerplattform soll ferngesteuert vom Boden aus bewegt werden können. Dabei soll die Plattform auch so geschwenkt werden können, dass Decken- wie auch Bodenaufnahmen möglich sind, vorzugsweise um 360° Schwenkwinkel.

In der Zeichnung ist ein Ausführungsbeispiel der Erfindung dargestellt. Es zeigen:
- Fig. 1: schematisch eine Seitenansicht einer Vorrichtung zum Fotografieren eines Objekts, wobei nur schematisch ein Trägerfahrzeug samt darauf angeordnetem Teleskopausleger im ausgefahrenen Zustand angedeutet ist,
- Fig. 2: die Vorrichtung gemäß einer bevorzugten Ausgestaltung der Erfindung, wobei das Trägerfahrzeug näher dargestellt ist, der auf ihm angeordnete Teleskopausleger indes nur schematisch,
- Fig. 3: die Trägerplattform der Vorrichtung in einer ersten Position (mit ausgezogenen Linien) und in einer zweiten Position (mit gestrichelten Linien),
- Fig. 4: den Teleskopausleger der Vorrichtung im zusammengefahrenen Zustand,
- Fig. 5: den Teleskopausleger der Vorrichtung in vollständig ausgefahrenem Zustand,
- Fig. 6: die Trägerplattform mit auf ihr angeordneter Kamera sowie mit einer Haltevorrichtung für zwei Lampen,
- Fig. 7: in perspektivischer Darstellung eine Linearführung, die auf dem Trägerfahrzeug angeordnet ist und zum translatorischen Verschieben des Teleskopauslegers dient und
- Fig. 8: den Schnitt durch die Vorrichtung in Längsrichtung gesehen, wobei der Aufbau der Linearführung gemäß Fig. 7 ersichtlich ist.

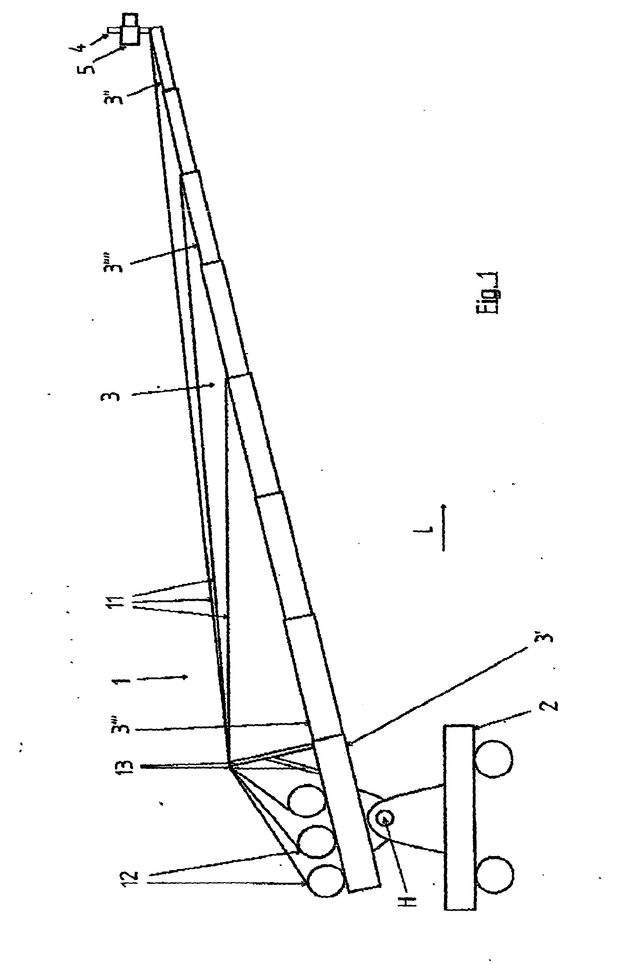

In Fig. 1 ist eine Vorrichtung 1 zu sehen, mit der eine genaue Inspektion von Baudenkmälern und eine präzise Dokumentation deren Ergebnisse möglich ist. Schematisch dargestellt ist ein Trägerfahrzeug 2, auf dem ein Teleskopausleger 3 angeordnet ist. Das Trägerfahrzeug 2 ist in eine Längsrichtung L verfahrbar. Auf dem Trägerfahrzeug 2 ist der gesamte Teleskopausleger 3 um eine horizontale Achse H schwenkbar angeordnet.

Dieser Teleskopausleger 3 ist in Fig. 1 im ausgefahrenen Zustand skizziert. Zu erkennen sind mehrere - insgesamt acht - Teile des Teleskopauslegers 3, von denen einige mit 3', 3", 3'" und 3"" bezeichnet sind.

Der Teleskopausleger wird mittels Seilen 11 und Seilrollen 12 samt Streben 13 in der gewünschten ausgefahrenen Position stabilisiert, wie es an sich bei Teleskopauslegern bekannt ist.

Während das untere Endteil 3' mit dem Trägerfahrzeug 2 verbunden ist, ist am oberen Endteil 3" eine nur schematisch angedeutete Trägerplattform 4 angebracht, die ein Aufnahme- oder Messgerät 5 in Form einer Kamera trägt.

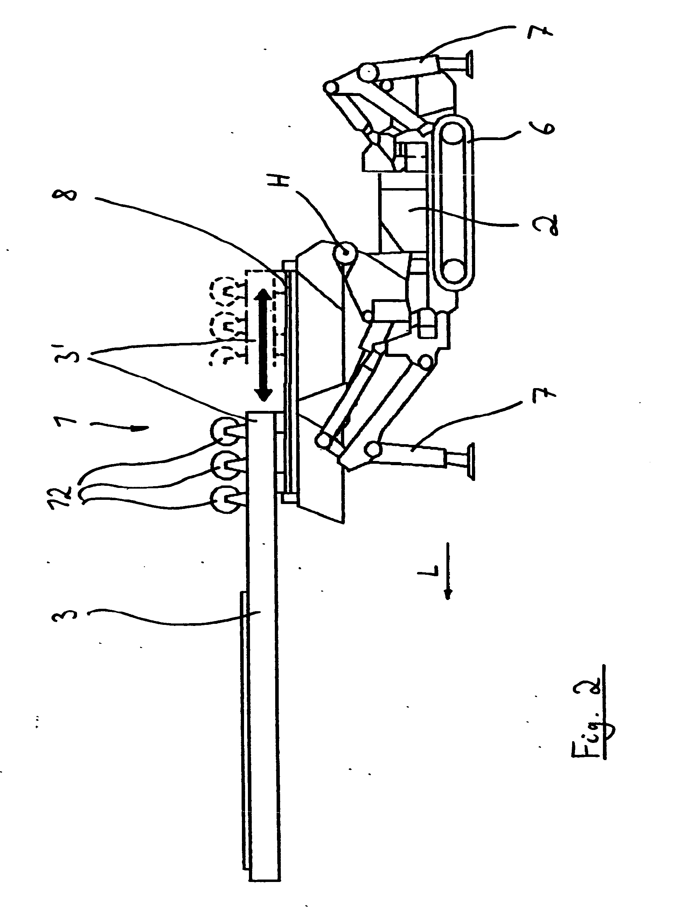

Einige Konstruktionsmerkmale des Trägerfahrzeugs 2 gehen aus Fig. 2 hervor. Dort ist zu erkennen, dass das Trägerfahrzeug 2 als Raupenfahrzeug ausgebildet ist, d. h. es weist einen Raupenantrieb 6 auf. Der Vorteil dieses Antriebs ist, dass er relativ problemlos (mittels einer Rampe) Treppenstufen überwinden kann und dass sich das Gewicht der gesamten Vorrichtung 1 auf eine relativ große Auflagefläche verteilt. Die Flächenpressung ist entsprechend gering. Dies ist vor allem bei historischen Böden von Vorteil, die teilweise keine hohen Belastungen aushalten können.

Ist die Vorrichtung 1 in Position gebracht, wird ein sicherer Stand durch vier Beine 7 gewährleistet, die vom Grundkörper des Trägerfahrzeugs 2 wegklappbar und wegschwenkbar sind und so für einen sicheren Stand sorgen. Der Vorteil der ausfahrbaren bzw. wegklappbaren Beine 7 ist, dass auch bei schwierigen Platzverhältnissen, z. B. zwischen Kirchenbänken, ein hinreichend sicherer Stand gewährleistet werden kann.

Ein sehr vorteilhaftes Detail der vorgeschlagenen Vorrichtung 1 geht aus Fig. 2 ebenfalls hervor: Der Teleskopausleger 3 und namentlich dessen unteres Endteil 3', das auf dem Trägerfahrzeug 2 befestigt ist, kann relativ zum Trägerfahrzeug 2 in Längsrichtung L verschoben werden, was durch den Doppelpfeil angedeutet ist und durch eine Linearführung 8 ermöglich wird.

Hiermit ist nicht nur bei schräg geschwenktem Teleskopausleger 3 eine optimale Schwerpunktunterstützung möglich, beim Rangieren kann der Teleskopausleger 3 durch die genannte Bewegungsmöglichkeit gegebenenfalls so verfahren werden, dass enge Passagen bewältigt werden können.

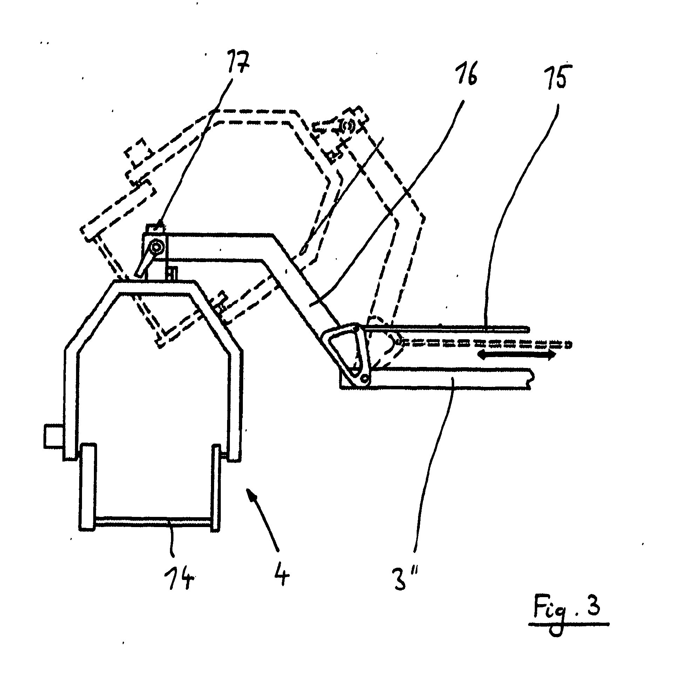

In Fig. 3 sind Details zu einer möglichen Ausgestaltung der Trägerplattform 4 zu erkennen. Die Trägerplattform 4 ist am oberen Endteil 3" des Teleskopauslegers 3 befestigt.

Dabei kann die angedeutete Schwenkmöglichkeit (s. ausgezogene Linien vs. gestrichelte Linien) genutzt werden, um eine auf einer Grundplatte 14 positionierbare Kamera o. ä. in die Lage zu bringen, wo sie das zu untersuchende Objekt optimal aufnehmen bzw. vermessen kann. Hierfür ist ein Spannseil 15 vorgesehen. Dieses bewegt ein armartig ausgebildetes Befestigungselement 16, das wiederum über einen Zapfen (Eurozapfen) 17 die eigentliche Trägerplattform 4 trägt.

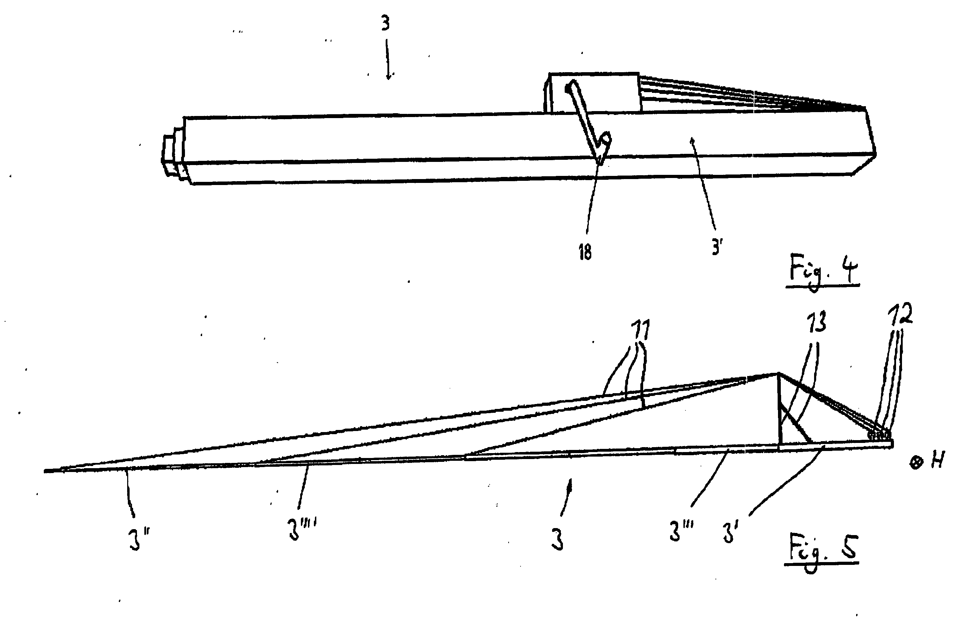

In Fig. 4 ist der zusammengefahrene Teleskopausleger 3 zu sehen, wobei mittels einer Handkurbel 18 das Auseinander- und Zusammenfahren der einzelnen Teleskopteile vorgenommen werden kann. Bevorzugt ist jedoch ein elektrischer Antrieb zum Auseinander- und Zusammenfahren der Teleskopteile vorgesehen (in Fig. 4 nicht dargestellt).

In Fig. 5 ist der Teleskopausleger 3 im vollständig ausgefahrenen Zustand zu sehen, wobei die Seile 11, die Seilrollen 12 und die Streben 13 angedeutet sind, die bei Teleskopauslegern als solche bekannt sind.

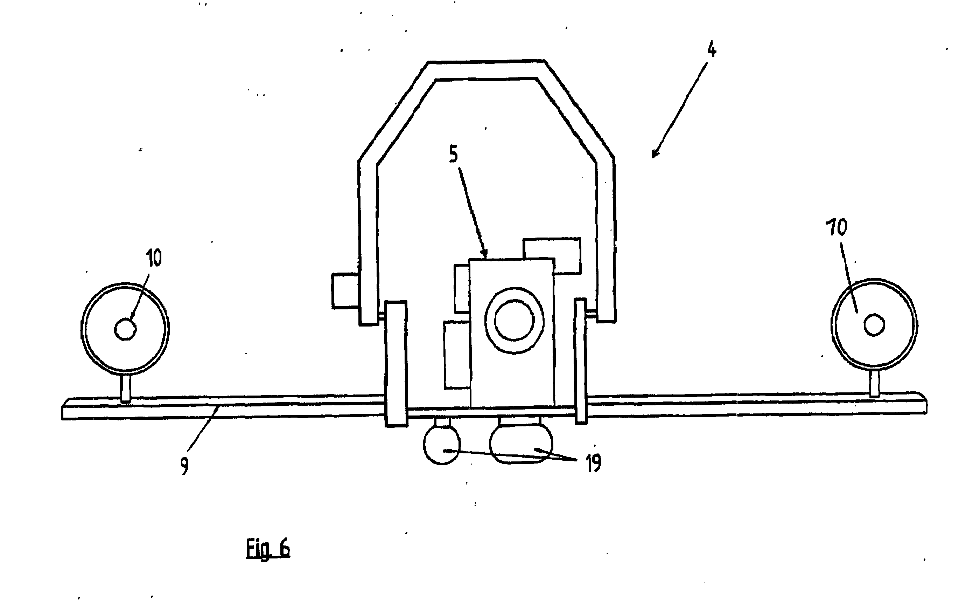

In Fig. 6 ist illustriert, wie die Trägerplattform 4 ausgeführt sein kann. Sie trägt zunächst eine Kamera 5. Darüber hinaus ist eine Haltevorrichtung 9 an der Trägerplattform 4 angebracht, die Hilfselemente 10 in Form von Lampen trägt.

Erwähnenswert sind auch an der Trägerplattform 4 angeordnete Gyroskope 19, die Bestandteil eines Systems zur Stabilisierung der Trägerplattform 4 sind.

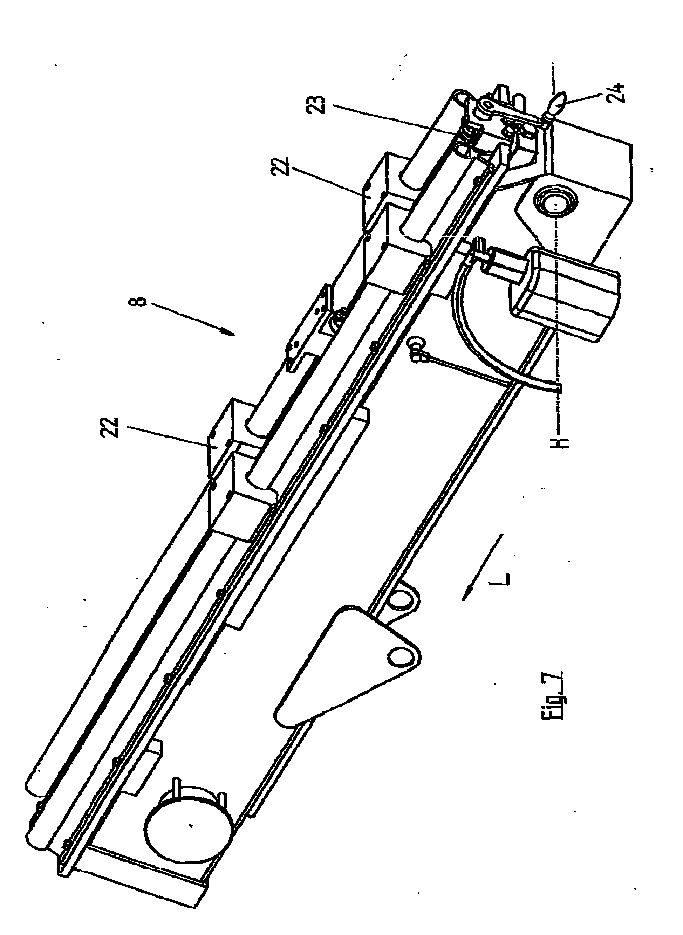

In Fig. 7 ist der oberste Bereich des Trägerfahrzeugs 2 zu sehen, und zwar eine Linearführung 8, mit der der Teleskopausleger 3 (nicht dargestellt in Fig. 7) in Längsrichtung L relativ zum Trägerfahrzeug 2 bewegt werden kann.

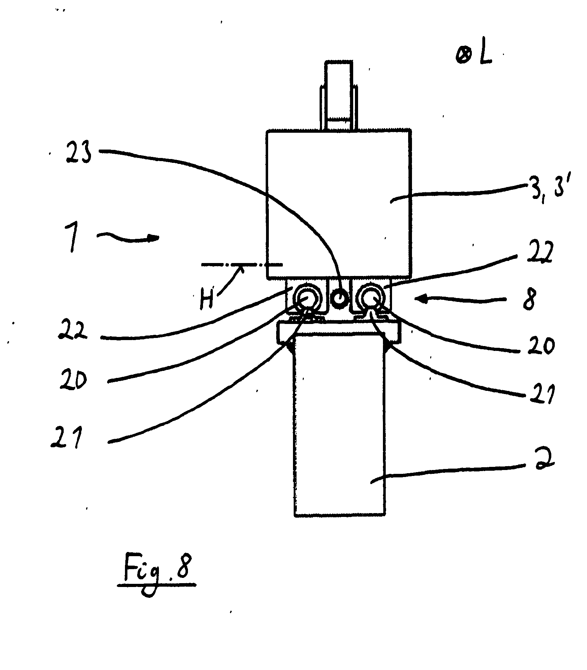

Weitere Details sind hierzu in Fig. 8 zu erkennen.

Die Linearführung 8 hat zwei Gleitlager 20, deren Führungsschienen 21 auf dem Trägerfahrzeug 2 festgelegt sind. Die Gleitlager-Buchsen 22 (ausgebildet als offenes Profil) sind jeweils mit dem unteren Endteil 3' des Teleskopauslegers 3 verbunden.

Die Betätigung der Linearverschiebung erfolgt über eine Trapezspindel 23, die mittels einer Handkurbel 24 (s. Fig. 7) gedreht werden kann.

Da als Trägerfahrzeug ein Raupenkran vorgesehen ist, verteilt sich das Gewicht der Vorrichtung auf eine relativ große Fläche, so dass insbesondere historische Böden relativ pfleglich behandelt werden können. Mit den vier ausziehbaren bzw. ausfahrbaren Beinen ist die Möglichkeit gegeben, einen optimalen Stand der Vorrichtung auf dann herzustellen, wenn aufgrund der Umgebung (Kirchenbänke etc.) schwierige Bedingungen herrschen.

Da das Trägerfahrzeug sowohl einen Verbrennungsmotor für den Eigenantrieb als auch einen Elektromotor zu diesem Zweck hat, besteht die Möglichkeit, die Vorrichtung mittels des Verbrennungsmotors außerhalb eines Gebäudes autark und ohne externe Energieversorgung zu verfahren. Im Gebäude wird dann auf Elektroantrieb umgestellt, so dass eine Abgasbelastung ausgeschlossen ist.

Der translatorisch auf dem Trägerfahrzeug angeordnete Teleskopausleger kann nicht nur hierdurch in die optimale Position bewegt werden, um die beste Schwerpunktslage bei schräg positioniertem Teleskopausleger zu finden; vielmehr ermöglicht diese Bewegungsmöglichkeit auch, gegebenenfalls eine Verbesserung der Manövrierfähigkeit der Vorrichtung im zusammengefahrenen Zustand zu erzielen, wenn enge und winkelige Bereich passiert werden müssen, wie sie oft in historischen Gebäuden anzutreffen sind.

Die Trägerplattform ermöglicht das modulare Aufnehmen diverser Kameras, Scanner und Messgeräte. Hier sind neben den üblichen und gebräuchlichen Kameras auch Scanner und Einrichtungen zur thermographischen Aufnahme zu nennen, die sich für die Untersuchung von Wandflächen besonders eignen. Weiterhin kommen spektrale Lampen sowie Blitzlichter etc. zum Einsatz.

Die Datenübertragung von den Kameras und Messzeugen zum Boden kann über an sich bekannte Mittel per Draht oder drahtlos erfolgen (Übertragungsprotokoll "Firewire" besonders bevorzugt).

Für die Versorgung der Trägerplattform mit Energie und für den Datentransfer hat es sich bewährt, wenn Kabel am Teleskopausleger mittels Ösen geführt werden, wobei nicht benötigte Kabel von einer Kabelrolle aufgewickelt werden.

Die bevorzugt gewählte quadratische oder rechteckige Querschnittsform der Teleskoprohre führt bei der Wahl von vorzugsweise acht ineinander schiebbaren Teleskopteilen zu einem schwingungsarmen Aufbau bei gleichzeitiger Möglichkeit, relativ problemlos die angestrebte maximale Höhe von 25 Metern zu erreichen. Die Teleskopteile bestehen dabei bevorzugt aus eloxiertem Aluminium.

Der Betätigungsmechänismus für den Teleskopausleger ist - wie es an sich bekannt ist - so ausgeführt, dass alle Teleskopteile gleichzeitig, d. h. simultan aus- und einfahren.

Mit der vorgeschlagenen Lösung besteht die Möglichkeit, auf beschränktem Raum eine Vorrichtung der beschriebenen Art aufzubauen, die bei relativ geringem Gewicht eine große Arbeitshöhe erreicht, dennoch aber eine geringe Auslegergröße aufweist. Das Passieren relativ enger Passagen (Türen) ist möglich. Schließlich ist der Transport der Vorrichtung relativ unproblematisch; es reicht ein Van hierzu aus.

Die Teile sind so ausgeführt, dass weitgehende Wartungsfreiheit vorliegt.

Mit der Vorrichtung kann ein umfassendes Monitoring des Zustands eines Gebäudes erfolgen, was sich in besonders bevorzugter Weise für die Denkmalpflege nutzen lässt. Allerdings ist der Einsatz der Vorrichtung keineswegs auf diesen Anwendungszweck beschränkt.

### Bezugszeichenliste:

- 1: Vorrichtung
- 2: Trägerfahrzeug
- 3: Teleskopausleger
- 3': unteres Endteil des Teleskopauslegers
- 3": oberes Endteil des Teleskopauslegers
- 3'": weiteres Teil des Teleskopauslegers
- 3"": weiteres Teil des Teleskopauslegers
- 4: Trägerplattform
- 5: Aufnahme- oder Messgerät
- 6: Raupenantrieb
- 7: Bein
- 8: Linearführung
- 9: Haltevorrichtung
- 10: Hilfselement (Lampe, Blitzlicht)
- 11: Seil
- 12: Seilrolle
- 13: Strebe
- 14: Grundplatte
- 15: Spannseil
- 16: Befestigungselement
- 17: Zapfen (Eurozapfen)
- 18: Handkurbel
- 19: Gyroskop
- 20: Gleitlager
- 21: Führungsschiene
- 22: Gleitlager-Buchse
- 23: Trapezspindel
- 24: Handkurbel

- H: horizontale Achse
- L: Längsrichtung

## Patentansprüche

1. Vorrichtung (1) zum Fotografieren und/oder Scannen und/oder Vermessen eines Objekts, insbesondere eines sich in größerer Höhe über dem Boden befindlichen Teils eines Baudenkmals,
**dadurch gekennzeichnet,**
**dass** es aufweist:
- ein Trägerfahrzeug (2) mit mindestens einem Antriebsmotor,
- einen aus mehreren ineinanderfahrbar ausgebildeten Teilen (3', 3", 3''', 3"") bestehender Teleskopausleger (3), wobei das eine Endteil (3') des Teleskopauslegers (3) im oberen Bereich des Trägerfahrzeugs (2) um eine horizontale Achse (H) schwenkbar angeordnet ist, und
- eine am anderen Endteil (3") des Teleskopauslegers (3) angeordnete, insbesondere modular ausgebildete Trägerplattform (4) zur Aufnahme mindestens eines Aufnahme- oder Messgeräts (5).

2. Vorrichtung nach Anspruch 1, **dadurch gekennzeichnet, dass** das Trägerfahrzeug (2) einen Raupenantrieb (6) aufweist.

3. Vorrichtung nach Anspruch 1 oder 2, **dadurch gekennzeichnet, dass** am Trägerfahrzeug (2) eine Anzahl, vorzugsweise vier, ausfahrbarer oder ausklappbarer Beine (7) angeordnet sind.

4. Vorrichtung nach einem der Ansprüche 1 bis 3, **dadurch gekennzeichnet, dass** das Trägerfahrzeug (2) sowohl einen Antriebsmotor in Form einer Brennkraftmaschine als auch einen elektrischen Antriebsmotor aufweist.

5. Vorrichtung nach einem der Ansprüche 1 bis 4, **dadurch gekennzeichnet, dass** der Teleskopausleger (3) auf dem Trägerfahrzeug (2) auf einer Linearführung (8) angeordnet ist, mit der er in Längsrichtung (L) des Trägerfahrzeugs (2) relativ zu diesem verfahren werden kann.

6. Vorrichtung nach einem der Ansprüche 1 bis 5, **dadurch gekennzeichnet, dass** der Teleskopausleger (3) zwischen 6 und 10, vorzugsweise 8, ineinanderfahrbar ausgebildete Teile (3', 3", 3'", 3"") aufweist.

7. Vorrichtung nach einem der Ansprüche 1 bis 6, **dadurch gekennzeichnet, dass** der Teleskopausleger (3) im vollständig ausgefahrenen Zustand eine Länge von mindestens 15 m, vorzugsweise von 25 m, aufweist.

8. Vorrichtung nach einem der Ansprüche 1 bis 7, **dadurch gekennzeichnet, dass** das Aufnahme- oder Messgerät (5) ein Fotoapparat, ein 3-D-Scanner oder ein thermographisches Aufzeichnungsgerät ist.

9. Vorrichtung nach einem der Ansprüche 1 bis 8, **dadurch gekennzeichnet, dass** an der Trägerplattform (4) weiterhin mindestens eine Haltevorrichtung (9) für ein Hilfselement (10), insbesondere für eine Lampe oder ein Blitzlicht, angeordnet ist.

10. Vorrichtung nach einem der Ansprüche 1 bis 9, **dadurch gekennzeichnet, dass** zwischen Trägerfahrzeug (2) und Trägerplattform (4) mindestens ein Energieversorgungskabel verläuft.
